(19) Europäisches Patentamt
European Patent Office
Office européen des brevets

(11) **EP 4 070 878 A1**

(12) **DEMANDE DE BREVET EUROPEEN**

(43) Date de publication:
**12.10.2022  Bulletin 2022/41**

(21) Numéro de dépôt: **22167224.9**

(22) Date de dépôt: **07.04.2022**

(51) Classification Internationale des Brevets (IPC):
**B01D 53/62** *(2006.01)*     **B01D 53/00** *(2006.01)*

(52) Classification Coopérative des Brevets (CPC):
**B01D 53/00;** B01D 2256/245; B01D 2257/504;
B01D 2258/05; B01D 2259/416

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité:  **09.04.2021  FR 2103638**

(71) Demandeur: **Prodeval SAS**
**26300 Chateauneuf sur Isère (FR)**

(72) Inventeurs:
• **PAOLOZZI, Sébastien**
**26300 SAINT VINCENT LA COMMANDERIE (FR)**
• **PEYRAT, Eric**
**31000 TOULOUSE (FR)**

(74) Mandataire: **Argyma**
**14 Boulevard de Strasbourg**
**31000 Toulouse (FR)**

(54)   **TRAITEMENT DES FLUX D'ÉPURATION DU BIOGAZ**

(57)   Procédé de traitement de gaz, ledit procédé comprenant une étape (E1) d'épuration d'un flux de biogaz couplée à au moins une étape (E2) de capture de dioxyde de carbone d'un flux de gaz, ledit flux de gaz pouvant être le flux de biogaz avant épuration (BS), le flux de biogaz après épuration (BM) ou le flux de gaz résiduel (GR1) issu de l'épuration.

[Fig 17]

FIGURE 17

EP 4 070 878 A1

**Description**

**[Domaine technique]**

La présente invention se rapporte au domaine du traitement du biogaz, au sens de la norme ISO 20675, et concerne plus particulièrement un procédé et un système de traitement d'un flux de biogaz.

**[Etat de la technique antérieure]**

Dans les systèmes de traitement de biogaz existants, il est connu de réaliser l'épuration d'un flux de biogaz, reçu par exemple d'un méthaniseur. Une telle épuration consiste à séparer les mélanges gazeux du flux afin d'obtenir, d'une part, un flux de biométhane, riche en méthane, en retirant du dioxyde de carbone et, d'autre part, un flux de gaz résiduel riche en dioxyde de carbone. En pratique, le flux de biogaz épuré comporte encore du dioxyde de carbone et le flux de gaz résiduel comporte encore du méthane.

Dans les solutions existantes, le flux de gaz résiduel est classiquement rejeté à l'atmosphère, ce qui présente un premier inconvénient étant donné que ce flux est riche en dioxyde de carbone. En outre, ce flux contient également du méthane, gaz à fort pouvoir de réchauffement global, ce qui présente un deuxième inconvénient.

De plus, il est nécessaire d'optimiser les unités de production de biométhane de manière à réduire les coûts énergétiques de production de ce gaz renouvelable tout en limitant l'impact carbone du biométhane.

Il existe donc un besoin d'une solution simple et efficace permettant de remédier au moins en partie à ces inconvénients.

**[Exposé de l'invention]**

A cette fin, l'invention a tout d'abord pour objet un procédé de traitement de gaz, ledit procédé comprenant une étape d'épuration d'un flux de biogaz couplée à au moins une étape de capture de dioxyde de carbone d'un flux de gaz, ledit flux de gaz pouvant être le flux de biogaz avant épuration, le flux de biogaz après épuration ou le flux de gaz résiduel issu de l'épuration.

Dans le présent document, par le terme « biogaz », on entend « au sens de la norme ISO 20675 » qui couvre notamment le biogaz produit par fermentation anaérobie (en absence d'air) de matières organiques et les « syngas », qui sont les gaz obtenus par des procédés tels que la pyro-gazéification, la méthanation biologique ou catalytique ou tout autre procédé qui conduit à la production d'un mélange gazeux composé essentiellement de méthane et de dioxyde de carbone.

Par les termes « capture de dioxyde de carbone d'un flux de gaz », on entend la capture du dioxyde de carbone dans ledit flux de gaz par un dispositif de capture mettant en œuvre, par exemple, une séparation membranaire, une séparation cryogénique, une adsorption sur lit (tamis moléculaire, zéolites...), une absorption physique ou une absorption chimique.

Le procédé selon l'invention permet de capturer du dioxyde de carbone dans un flux de biogaz avant épuration ou dans un flux de biométhane issu de l'épuration ou bien dans le flux de gaz résiduel issu de l'épuration. Le dioxyde de carbone capturé peut ensuite être valorisé, par exemple en le liquéfiant pour le transporter sur les sites consommateurs de dioxyde de carbone, tels que par exemple des serres agricoles, l'industrie chimique ou agro-alimentaire, ou d'autres industries, ou par exemple en le convertissant pour le stocker à l'état solide (formation de carbonates ou autres). Une telle valorisation permet d'éviter de rejeter ce dioxyde de carbone dans l'atmosphère (gaz à effet de serre) tandis que le flux de gaz résiduel peut être recirculé dans le biogaz ou dans le biométhane ou bien valorisé à son tour.

De préférence, la capture de dioxyde de carbone étant réalisée sur le flux de gaz résiduel issu de l'épuration de sorte à générer un flux de gaz résiduel issu de la capture de dioxyde de carbone, le procédé comprend une étape de combustion du flux de gaz résiduel issu de la capture de dioxyde de carbone dans une unité de combustion. La combustion du flux de gaz résiduel issu de la capture de dioxyde de carbone permet d'éviter de rejeter ledit flux de gaz résiduel dans l'atmosphère. De préférence, l'unité de combustion est une unité de valorisation, par exemple de type moteur de cogénération, chaudière ou turbine, permettant la production d'électricité et/ou de chaleur.

L'invention concerne également un système de traitement de gaz, ledit système comprenant au moins une unité d'épuration d'un flux de biogaz couplée à au moins une unité de capture de dioxyde de carbone dans un flux de gaz, ledit flux de gaz pouvant être le flux de biogaz avant épuration, le flux de biogaz après épuration ou le flux de gaz résiduel issu de l'épuration.

Dans une forme de réalisation, le système comprend une unité de capture amont, adaptée pour recevoir un flux de biogaz et capturer du dioxyde de carbone dans ledit flux de biogaz, et une unité d'épuration reliée à l'unité de capture amont et adaptée pour recevoir le flux de biogaz appauvri en dioxyde de carbone et épurer ledit flux de biogaz appauvri reçu. Le système permet ainsi d'appauvrir le flux de biogaz avant de le fournir à l'unité d'épuration, ce qui permet à la fois de récupérer du dioxyde de carbone, par exemple pour le valoriser, afin d'éviter de le rejeter dans l'atmosphère (gaz à effet de serre), et de baisser les coûts de l'unité d'épuration, le flux de biogaz entrant dans l'unité d'épuration étant appauvri en dioxyde de carbone, son débit est plus faible, ce qui nécessite des équipements plus petits dans l'unité d'épuration (notamment le ou les compresseurs) et donc moins chers à l'achat et en exploitation, à volume de traitement de biogaz égal et à performances d'épuration (teneur en méthane du flux de biométhane) égales.

Dans une autre forme de réalisation, le système comprend une unité d'épuration, adaptée pour recevoir un flux de biogaz et épurer ledit flux de biogaz reçu, et une unité de capture avale, reliée à l'unité d'épuration et adaptée pour recevoir le flux de biogaz épuré et pour capturer du dioxyde de carbone dans ledit flux de biogaz épuré reçu. L'appauvrissement en dioxyde de carbone du flux de biométhane produit par l'unité d'épuration permet de récupérer du dioxyde de carbone pour éviter de le rejeter dans l'atmosphère lors de la combustion du biométhane, voire de le valoriser, et de produire un biométhane avec une teneur en biométhane potentiellement plus riche en méthane, pouvant par exemple être liquéfié pour être valorisé, ou alors, à performances d'épuration égales, de baisser les coûts de l'unité d'épuration, le rendement de la brique d'épuration du biogaz en biométhane étant plus faible, le nombre d'équipements nécessaires à la production de ce biométhane avec une teneur en méthane dégradée est également plus faible.

Dans une autre forme de réalisation, le système comprend une unité d'épuration, adaptée pour recevoir un flux de biogaz et épurer ledit flux de biogaz reçu en générant un flux de gaz résiduel, et une unité de capture annexe, reliée à l'unité d'épuration et adaptée pour recevoir le flux de gaz résiduel issu de l'unité d'épuration et capturer du dioxyde de carbone dans ledit flux de gaz résiduel reçu pour former un flux de dioxyde de carbone enrichi et un flux de gaz résiduel issu de la capture de dioxyde de carbone. L'unité de capture annexe permet ainsi de collecter du dioxyde de carbone dans le flux de gaz résiduel issu de l'épuration pour réduire, voire supprimer les rejets de gaz polluants ou à effet de serre, liés à ce flux et faciliter sa valorisation.

De préférence, le système comprend en outre une unité de combustion connectée fluidiquement à l'unité de capture annexe et adaptée pour recevoir ledit flux de gaz résiduel issu de la capture de dioxyde de carbone et pour brûler ledit flux de gaz résiduel issu de la capture de dioxyde de carbone reçu afin de le valoriser en énergie électrique et/ou en chaleur. L'unité de capture annexe permet ainsi de collecter du dioxyde de carbone dans le flux de gaz résiduel issu de l'épuration pour réduire, voire supprimer les rejets de gaz polluants ou à effet de serre, liés à ce flux. Le système permet aussi de traiter, en plus du flux de gaz résiduel issu de l'épuration, le flux de gaz résiduel issu de la capture de dioxyde de carbone afin d'éviter tout rejet dans l'atmosphère, de préférence en le valorisant lors de la combustion.

Avantageusement, le système comprenant une unité de capture annexe et une unité de combustion connectée fluidiquement à ladite unité de capture annexe et adaptée pour recevoir ledit flux de gaz résiduel issu de la capture de dioxyde de carbone et pour brûler ledit flux de gaz résiduel issu de la capture de dioxyde de carbone reçu, le système comprend en outre :

- un module de contrôle,

- un premier analyseur configuré pour analyser la composition du flux de gaz résiduel issu de l'unité de capture annexe, pour déterminer la teneur en méthane dudit flux de gaz résiduel et pour envoyer la teneur déterminée au module de contrôle,

- une unité d'enrichissement, configurée pour collecter un flux d'air atmosphérique, pour enrichir ledit flux d'air atmosphérique en dioxygène en fonction d'une valeur corrective fournie par le régulateur et pour fournir ce flux d'air enrichi en dioxygène à l'unité de combustion,

- un deuxième analyseur configuré pour analyser la composition du flux d'air enrichi fourni par l'unité d'enrichissement à l'unité de combustion et pour envoyer ses données au régulateur,

- un régulateur configuré pour recevoir, du module de contrôle, une consigne de teneur en dioxygène et, du deuxième analyseur, une teneur en dioxygène du flux d'air enrichi fourni par l'unité d'enrichissement à l'unité de combustion, et pour fournir à l'unité d'enrichissement une correction à appliquer, déterminée à partir de la consigne de teneur en dioxygène et de la teneur en dioxygène du flux d'air enrichi,

le module de contrôle étant configuré pour déterminer une consigne de teneur en dioxygène d'un flux d'air permettant de réaliser la combustion du méthane contenu dans les gaz résiduels dans l'unité de combustion à partir de la teneur en méthane envoyée par le premier analyseur en respectant le facteur de dioxygène et le facteur de méthane de l'unité de combustion et pour fournir la consigne de teneur en dioxygène déterminée au régulateur.

En maîtrisant la teneur en dioxygène du flux d'air enrichi alimentant l'unité de combustion pour s'assurer de la combustion des gaz, le système permet avantageusement de brûler le flux de gaz résiduel issu de l'unité de capture de manière efficace dans l'unité de combustion et ainsi de supprimer l'émission de gaz à effet de serre du système, et aussi de valoriser énergétiquement du méthane de sorte à améliorer le rendement énergétique global du système.

En variante, le système comprenant une unité de capture annexe et une unité de combustion connectée fluidiquement à ladite unité de capture annexe et adaptée pour recevoir ledit flux de gaz résiduel issu de la capture de dioxyde de carbone et pour brûler ledit flux de gaz résiduel issu de la capture de dioxyde de carbone reçu, le système comprend en outre :

- un module de contrôle,

- un premier analyseur configuré pour analyser la composition du flux de gaz résiduel issu de l'unité d'épuration, pour déterminer la teneur en méthane dudit flux de gaz résiduel et pour envoyer la teneur déterminée au module de contrôle,

- une unité d'enrichissement, configurée pour collecter un flux d'air atmosphérique, pour enrichir ledit flux d'air atmosphérique en dioxygène en fonction d'une valeur corrective fournie par le régulateur et pour fournir ce flux d'air enrichi en dioxygène à l'unité de combustion,

- un deuxième analyseur configuré pour analyser la composition du flux d'air enrichi fourni par l'unité d'enrichissement à l'unité de combustion et pour envoyer ses données au régulateur,

- un régulateur configuré pour recevoir, du module de contrôle, une consigne de teneur en dioxygène et, du deuxième analyseur, une teneur en dioxygène du flux d'air enrichi fourni par l'unité d'enrichissement à l'unité de combustion, et pour fournir à l'unité d'enrichissement une correction à appliquer, déterminée à partir de la consigne de teneur en dioxygène et de la teneur en dioxygène du flux d'air enrichi,

l'unité de capture annexe étant configurée pour envoyer le taux de capture de dioxyde de carbone au module de contrôle, le module de contrôle étant configuré pour déterminer une consigne de teneur en dioxygène d'un flux d'air permettant de réaliser la combustion du méthane contenu dans les gaz résiduels de l'unité de capture annexe dans l'unité de combustion à partir de la teneur en méthane envoyée par le premier analyseur et du taux de capture envoyé par l'unité de capture annexe en respectant le facteur de dioxygène et le facteur de méthane de l'unité de combustion et pour fournir la consigne de teneur en dioxygène déterminée au régulateur.

En maîtrisant la teneur en dioxygène du flux d'air enrichi alimentant l'unité de combustion pour s'assurer de la combustion des gaz, le système permet avantageusement de brûler le flux de gaz résiduel issu de l'unité de capture de manière efficace dans l'unité de combustion et ainsi de supprimer l'émission de gaz à effet de serre du système, et aussi de valoriser énergétiquement du méthane de sorte à améliorer le rendement énergétique global du système.

Dans une forme de réalisation, l'au moins une unité de capture est une unité de liquéfaction. Une telle unité de liquéfaction permet de réduire le volume du dioxyde de carbone capté (l'état liquide étant plus dense que l'état gazeux) et ainsi de transporter une quantité plus importante de dioxyde de carbone vers le lieu de consommation à volume de transport égale. L'état liquide est l'état standard de commercialisation du dioxyde de carbone, notamment en France. Une unité de liquéfaction permet également la production d'un flux résiduel de gaz contenant du méthane qui peut être recirculé en entrée d'unité d'épuration et améliore ainsi le rendement épuratoire de l'unité. L'unité de liquéfaction peut être complétée d'une brique de distillation permettant d'atteindre une qualité alimentaire sur le dioxyde de carbone produit, et d'améliorer encore le rendement épuratoire de l'unité.

Dans une forme de réalisation, le système comprenant une unité de capture annexe et une unité de combustion connectée fluidiquement à ladite unité de capture annexe et adaptée pour recevoir ledit flux de gaz résiduel issu de la capture de dioxyde de carbone et pour brûler ledit flux de gaz résiduel issu de la capture de dioxyde de carbone reçu, le système comprend en outre un équipement de production de biogaz, par exemple un digesteur anaérobie, connecté fluidiquement à l'unité de combustion afin de recevoir la chaleur produite par ladite unité de combustion.

En variante ou en complément, le système comprenant une unité de capture annexe et une unité de combustion connectée fluidiquement à ladite unité de capture annexe et adaptée pour recevoir ledit flux de gaz résiduel issu de la capture de dioxyde de carbone et pour brûler ledit flux de gaz résiduel issu de la capture de dioxyde de carbone reçu, ladite unité de combustion étant configurée pour produire de l'électricité à partir de la combustion du flux de gaz résiduel issu de la capture de dioxyde de carbone reçu, le système comprend en outre une pompe à chaleur alimentée électriquement à partir de l'électricité produite par l'unité de combustion et configurée pour produire de la chaleur afin d'augmenter le rendement énergétique du système.

Avantageusement, le système comprend un équipement de production de biogaz, par exemple un digesteur anaérobie, relié à la pompe à chaleur afin de recevoir la chaleur produite par ladite pompe à chaleur et améliorer ainsi le rendement énergétique de l'installation. En effet, la chaleur produite par ladite pompe à chaleur permet de diminuer la quantité de chaleur à apporter à l'équipement de production de biogaz par combustion de biogaz ou de biométhane, ou de remplacer les sources de chauffage existantes de l'équipement de production de biogaz, qui classiquement doit être chauffé. Le digesteur peut être chauffé par combustion du biogaz dans des unités dont le rendement thermique est compris entre 0,9 et 0,95. Dans le cas de l'utilisation d'une pompe à chaleur, par exemple d'un coefficient de performance compris entre 1 et 4, la pompe à chaleur étant alimentée électriquement par une unité de combustion qui est une unité de cogénération (par exemple d'un rendement électrique compris entre 0,3 et 0,45) et l'équipement de production de biogaz étant également alimenté en chaleur produite par l'unité de combustion, le rendement thermique global du système est amélioré significativement, par exemple de l'ordre 250%.

**[Description des dessins]**

D'autres caractéristiques et avantages de l'invention apparaîtront encore à la lecture de la description qui va suivre. Celle-ci est purement illustrative et doit être lue en regard des dessins annexés sur lesquels :

[Fig 1] La figure 1 illustre schématiquement une première forme de réalisation du système selon l'invention.

[Fig 2] La figure 2 illustre schématiquement une deuxième forme de réalisation du système selon l'invention.

[Fig 3] La figure 3 illustre schématiquement une troisième forme de réalisation du système selon l'invention.

[Fig 4] La figure 4 illustre schématiquement une quatrième forme de réalisation du système selon l'invention.

[Fig 5] La figure 5 illustre schématiquement une cinquième forme de réalisation du système selon l'invention.

[Fig 6] La figure 6 illustre schématiquement une sixième forme de réalisation du système selon l'invention.

[Fig 7] La figure 7 illustre schématiquement une septième forme de réalisation du système selon l'invention.

[Fig 8] La figure 8 illustre schématiquement une huitième forme de réalisation du système selon l'invention.

[Fig 9] La figure 9 illustre schématiquement une neuvième forme de réalisation du système selon l'invention.

[Fig 10] La figure 10 illustre schématiquement une dixième forme de réalisation du système selon l'invention.

[Fig 11] La figure 11 illustre schématiquement une onzième forme de réalisation du système selon l'invention.

[Fig 12] La figure 12 illustre schématiquement un exemple d'unité d'épuration du système selon l'invention.

[Fig 13] La figure 13 illustre schématiquement une première évolution de la quatrième forme de réalisation du système selon l'invention.

[Fig 14] La figure 14 illustre schématiquement une deuxième évolution de la quatrième forme de réalisation du système selon l'invention.

[Fig 15] La figure 15 illustre schématiquement une première évolution de la quatrième forme de réalisation de la figure 4.

[Fig 16] La figure 16 illustre schématiquement une deuxième évolution de la quatrième forme de réalisation de la figure 4.

[Fig 17] La figure 17 illustre schématiquement l'un des modes de réalisation du procédé selon l'invention.

**[Description des modes de réalisation]**

Le système selon l'invention permet de traiter un flux de biogaz au sens de la norme ISO 20675 afin de le transformer en biométhane et de capturer du dioxyde de carbone à certains stades du processus et valoriser certains des flux de gaz comme cela sera expliqué ci-après. Le biogaz est produit par fermentation anaérobie (en absence d'air) de matières organiques dans une unité de méthanisation ou sur un centre d'enfouissement des déchets. Les « syngas » désignent les gaz obtenus par des procédés tels que la pyro-gazéification, la méthanation biologique ou catalytique ou tout autre procédé qui conduit à la production d'un mélange gazeux composé essentiellement de méthane et de dioxyde de carbone.

Le système selon l'invention comprend au moins une unité d'épuration et au moins une unité de capture de dioxyde de carbone.

Une unité d'épuration permet de transformer un flux de biogaz en un flux de biométhane.

Une unité de capture permet de capturer du dioxyde de carbone dans le flux de gaz reçu en entrée de ladite unité de capture afin de générer en sortie un flux de dioxyde de carbone enrichi (i.e. enrichi en dioxyde de carbone par rapport au flux entrant dans l'unité de capture), noté $CO_2$ sur les figures, et un flux appauvri en dioxyde de carbone, dit « flux de gaz résiduel ». Le dioxyde de carbone du flux de dioxyde de carbone enrichi peut être sous forme purement liquide (suite à une liquéfaction dans l'unité de capture) ou bien sous forme purement gazeuse ou bien être un mélange de dioxyde de carbone liquide et gazeux. Notamment, pour produire un flux de dioxyde de carbone liquide, l'unité de capture peut être une unité de liquéfaction. Ceci est applicable pour n'importe lequel des exemples de système ci-après. Le flux de dioxyde de carbone capturé (enrichi) peut avantageusement être valorisé ou stocké. Par exemple, il peut être liquéfié, capté dans une matrice solide, converti (en carbonates ou autre), etc. Ceci est applicable pour n'importe lequel des exemples de système ci-après.

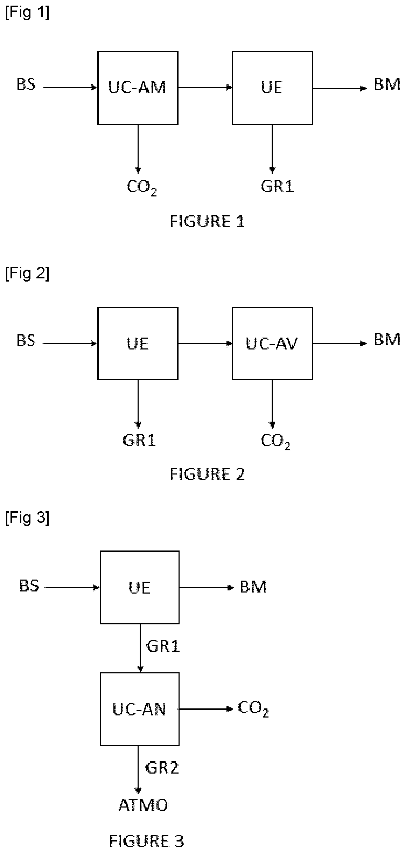

On a représenté à la figure 1 une première forme de réalisation du système selon l'invention.

Le système comprend une unité de capture dite « amont » UC-AM adaptée pour recevoir un flux de biogaz BS et pour capturer du dioxyde de carbone dans ledit flux de biogaz BS afin de générer d'une part un flux de dioxyde de carbone enrichi, par exemple sous forme liquide (liquéfaction), et d'autre part un flux de gaz résiduel qui est mélangé au flux de biogaz BS.

Le système comprend une unité d'épuration UE reliée à la sortie de l'unité de capture amont UC-AM et adaptée pour recevoir le flux de biogaz BS appauvri en dioxyde de carbone et pour épurer ledit flux de biogaz BS appauvri reçu afin de le transformer en un flux de biométhane BM.

Lors de l'épuration, l'unité d'épuration UE génère, outre le flux de biométhane BM, un flux de gaz résiduel GR1, riche en dioxyde de carbone et comprenant aussi du méthane. Dans cette forme de réalisation, ce flux de gaz résiduel GR1 est rejeté dans l'atmosphère. Le flux épuré est de préférence valorisé, par exemple en étant injecté dans un réseau de distribution ou de transport de gaz ou bien comprimé pour devenir du GNC (carburant Gaz Naturel Comprimé) ou liquéfié GNL (Gaz Naturel Liquéfié) ou bien encore pour alimenter une unité de production d'électricité et/ou de chaleur (cogénération).

Ce système permet avantageusement de retirer du dioxyde de carbone du flux de biogaz BS afin de pouvoir le valoriser ultérieurement ou de le stocker pour éviter qu'il ne pollue l'atmosphère (réduction des gaz à effets de serre). De plus, la présence de l'unité de capture amont UC-AM permet de réduire le coût de l'unité d'épuration UE à installer car le débit entrant dans l'unité d'épuration UE est réduit. En effet, plus le débit est faible, plus la taille des équipements de l'unité d'épuration UE peut être réduite et/ou moins d'équipements peuvent être utilisés, et moins de consommables (énergie et autre) sont utilisés, ce qui limite le coût de l'unité d'épuration UE.

On a représenté à la figure 2 une deuxième forme de réalisation du système selon l'invention.

Le système comprend une unité d'épuration UE adaptée pour recevoir un flux de biogaz BS et pour épurer ledit flux de biogaz BS reçu.

Lors de l'épuration, l'unité d'épuration UE génère un flux de gaz résiduel appauvri en méthane mais riche en dioxyde de carbone. Dans cette forme de réalisation, ce flux de gaz résiduel appauvri en méthane est rejeté dans l'atmosphère.

Le système comprend une unité de capture dite « avale », raccordée fluidiquement à la sortie de l'unité d'épuration UE et adaptée pour recevoir le flux de biogaz épuré et pour capturer du dioxyde de carbone dans ledit flux de biogaz épuré reçu. Le flux de dioxyde de carbone capturé peut avantageusement être valorisé ou stocké. Par exemple, il peut être liquéfié, capté dans une matrice solide, converti (en carbonates ou autre), etc.

Ce système permet avantageusement de retirer du dioxyde de carbone du flux de biométhane issu de l'épuration afin de pouvoir le valoriser ultérieurement ou de le stocker pour éviter qu'il ne pollue l'atmosphère (réduction des gaz à effets de serre).

On a représenté à la figure 3 une troisième forme de réalisation du système selon l'invention.

Le système comprend une unité d'épuration UE, adaptée pour recevoir un flux de biogaz BS et pour épurer ledit flux de biogaz BS reçu en générant un flux principal de biométhane BM et un flux secondaire de gaz résiduel GR1 appauvri en méthane (par rapport au flux entrant dans l'unité d'épuration UE).

Le système comprend une unité de capture dite « annexe » UC-AN, reliée à l'unité d'épuration UE et adaptée pour recevoir le flux secondaire de gaz résiduel GR1 appauvri en méthane généré par l'unité d'épuration UE et pour capturer du dioxyde de carbone dans ledit flux secondaire de gaz résiduel GR1, cette capture générant en sortie de l'unité de capture annexe UC-AN un flux de dioxyde de carbone enrichi et un flux de gaz résiduel GR2 enrichi en méthane (par rapport au flux entrant dans l'unité de capture annexe UC-AN). Dans le cas d'une liquéfaction, le flux de gaz résiduel GR2 enrichi en méthane est appelé flux « d'incondensables », les gaz résiduels constituant le flux de gaz n'ayant pas pu être liquéfiés aux pressions/températures/compositions données.

Dans cette forme de réalisation, le flux de gaz résiduel GR2 issu de l'unité de capture annexe UC-AN est rejeté dans l'atmosphère ou bien recirculé en amont de l'unité d'épuration.

Ce système permet avantageusement de retirer du dioxyde de carbone du flux de gaz résiduel GR1 issu de l'épuration afin de pouvoir le valoriser ultérieurement ou de le stocker pour éviter qu'il ne pollue l'atmosphère (réduction des gaz à effets de serre) et permet d'obtenir un flux de gaz résiduel GR2 plus riche en méthane qu'on peut donc valoriser plus facilement, notamment par des systèmes classiques (i.e. connus). En outre, seul le flux de gaz résiduel GR2 issu de l'unité de capture annexe UC-AN est rejeté à l'atmosphère et non le flux de gaz résiduel GR1 issu de l'unité d'épuration UE qui est traité par l'unité de capture annexe, ce qui permet de réduire l'émission de gaz à effets de serre.

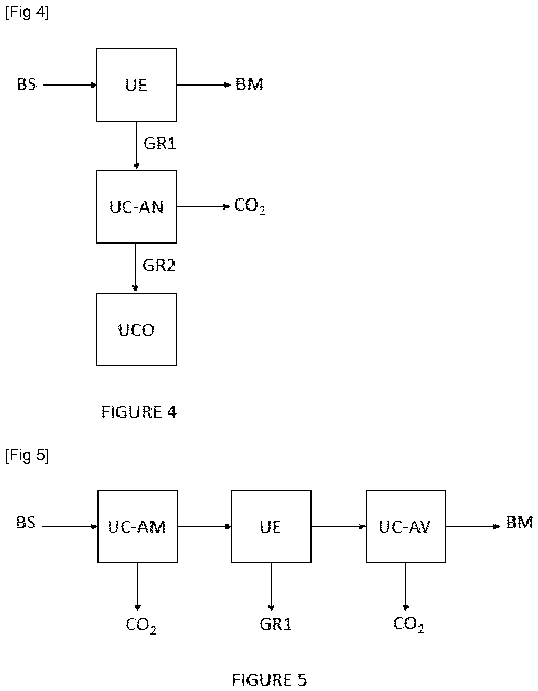

On a représenté à la figure 4 une quatrième forme de réalisation du système selon l'invention.

Le système est identique au système de la troisième forme de réalisation mais comprend en outre une unité de combustion UCO raccordée fluidiquement à l'unité de capture annexe UC-AN de sorte à collecter le flux de gaz résiduel GR2 enrichi en méthane issu de la capture de dioxyde de carbone pour le brûler afin de le valoriser, notamment pour produire de l'électricité ou de la chaleur. L'unité de combustion UCO peut être un moteur de cogénération, une chaudière, une turbine, etc.

Ce système permet avantageusement de retirer du dioxyde de carbone du flux de gaz résiduel GR1 issu de l'épuration afin de pouvoir le valoriser ultérieurement ou de le stocker pour éviter qu'il ne pollue l'atmosphère (réduction des gaz à effets de serre). En outre, le flux de gaz résiduel GR2 issu de l'unité de capture annexe UC-AN est valorisé par combustion tout en évitant de le rejeter dans l'atmosphère, ce qui permet de réduire l'émission de gaz polluant et permet de traiter l'ensemble des flux de gaz, principaux ou résiduels, du système pour une optimisation intégrale.

On a représenté à la figure 5 une cinquième forme de réalisation du système selon l'invention.

Le système comprend une unité de capture dite « amont » UC-AM, adaptée pour recevoir un flux de biogaz BS et pour capturer du dioxyde de carbone dans ledit flux de biogaz afin de produire un flux de dioxyde de carbone enrichi, par exemple sous forme liquide (liquéfaction).

Le système comprend une unité d'épuration UE alimentée par les gaz résiduels de l'unité de capture amont UC-AM, qui constituent un flux de biogaz enrichi en méthane, afin de les épurer et les transformer ainsi en biométhane BM.

Lors de l'épuration, l'unité d'épuration UE génère, outre le flux de biométhane, un flux de gaz résiduel GR1, riche en dioxyde de carbone et comprenant aussi du méthane. Dans cette forme de réalisation, ce flux de gaz résiduel GR1 est rejeté dans l'atmosphère.

Le système comprend une unité de capture dite « avale » UC-AV, raccordée fluidiquement à la sortie de l'unité d'épuration UE et adaptée pour recevoir le flux de biométhane BM et pour capturer du dioxyde de carbone dans ledit flux de biométhane BM reçu.

Ce système permet avantageusement de retirer du dioxyde de carbone à la fois du flux de biogaz BS avant épuration et du flux de biométhane BM après épuration afin de pouvoir le valoriser ultérieurement ou de le stocker pour éviter qu'il ne pollue l'atmosphère (réduction des gaz à effets de serre). De plus, la présence de l'unité de capture amont UC-AM permet de réduire le coût de l'unité d'épuration UE à installer car le débit entrant dans l'unité d'épuration UE est réduit. En effet, plus le débit est faible, plus la taille des équipements de l'unité d'épuration UE peut être réduite et/ou moins d'équipements peuvent être utilisés, et moins de consommables (énergie et autre) sont utilisés, ce qui limite le coût de l'unité d'épuration UE. L'unité de capture avale UC-AV permet de réduire le besoin d'efficacité de l'unité d'épuration UE, ce qui a pour effet de diminuer le coût de l'unité d'épuration UE à installer. Ce système permet avantageusement ensuite de retirer du dioxyde de carbone du flux de biométhane issu de l'épuration afin de pouvoir le valoriser ultérieurement ou de le stocker pour éviter qu'il ne pollue l'atmosphère (réduction des gaz à effets de serre).

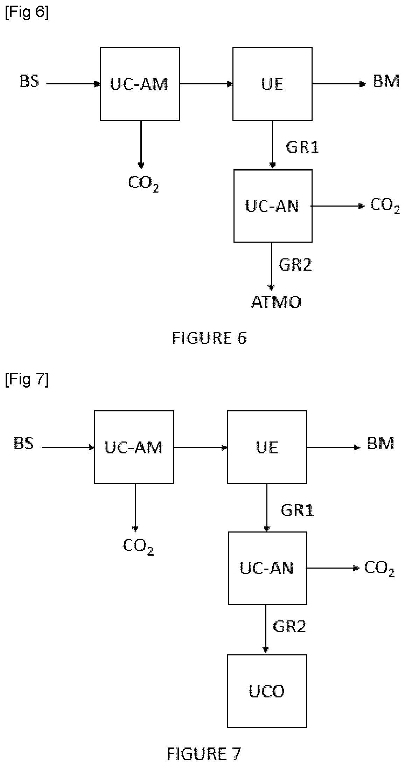

On a représenté à la figure 6 une sixième forme de réalisation du système selon l'invention.

Le système comprend une unité de capture dite « amont » UC-AM, adaptée pour recevoir un flux de biogaz BS et pour capturer du dioxyde de carbone dans ledit flux de biogaz BS afin de générer un flux de dioxyde de carbone enrichi, par exemple sous forme liquide (liquéfaction), les gaz résiduels étant mélangés au flux de biogaz.

Le système comprend une unité d'épuration UE reliée à la sortie de l'unité de capture amont UC-AM et adaptée pour recevoir le flux de biogaz traité par l'unité de capture amont UC-AM (i.e. enrichi en méthane) et pour épurer ledit flux de biogaz traité reçu afin de le transformer en un flux de biométhane BM.

Lors de l'épuration, l'unité d'épuration UE génère, outre le flux de biométhane, un flux de gaz résiduel GR1, riche en dioxyde de carbone et comprenant aussi du méthane.

Le système comprend une unité de capture dite « annexe » UC-AN, reliée à l'unité d'épuration UE et adaptée pour recevoir le flux de gaz résiduel GR1 appauvri en méthane issu de l'unité d'épuration UE et pour capturer du dioxyde de carbone dans ledit flux de gaz résiduel GR1 appauvri en méthane, cette capture générant en sortie de l'unité de capture annexe UC-AN un flux de dioxyde de carbone enrichi et un flux de gaz résiduel enrichi GR2 en méthane (par rapport au flux entrant dans l'unité de capture UC-AN). Dans le cas d'une liquéfaction, le flux de gaz résiduel GR2 enrichi en méthane est appelé flux « d'incondensables », les gaz résiduels constituant le flux de gaz n'ayant pas pu être liquéfiés aux pressions/températures/compositions données. Dans cette forme de réalisation, le flux de gaz résiduel GR2 enrichi en méthane est rejeté dans l'atmosphère ou recirculé en amont de l'unité de capture amont UC-AM ou de l'unité d'épuration UE.

Ce système permet avantageusement de retirer du dioxyde de carbone du flux de biogaz BS afin de pouvoir le valoriser ultérieurement ou de le stocker pour éviter qu'il ne pollue l'atmosphère (réduction des gaz à effets de serre). De plus, la présence de l'unité de capture amont UC-AM permet de réduire le coût de l'unité d'épuration UE à installer car le débit entrant dans l'unité d'épuration UE est réduit. En effet, plus le débit est faible, plus la taille des équipements de l'unité d'épuration UE peut être réduite et/ou moins d'équipements peuvent être utilisés, et moins de consommables (énergie et autre) sont utilisés, ce qui limite le coût de l'unité d'épuration UE. Ce système permet avantageusement aussi de retirer du dioxyde de carbone du flux de gaz résiduel issu de l'épuration afin de pouvoir le valoriser ultérieurement ou de le stocker pour éviter qu'il ne pollue l'atmosphère (réduction des gaz à effets de serre). En outre, seul le flux de gaz résiduel GR2 issu de l'unité de capture annexe est rejeté à l'atmosphère et non le flux de gaz résiduel GR1 issu de l'unité d'épuration UE qui est traité par l'unité de capture annexe UC-AN, ce qui permet de réduire l'émission de gaz à effets de serre.

On a représenté à la figure 7 une septième forme de réalisation du système selon l'invention.

Le système est identique au système de la sixième forme de réalisation mais comprend en outre une unité de combustion UCO raccordée fluidiquement à l'unité de capture annexe de sorte à collecter le flux de gaz résiduel enrichi en méthane pour le brûler afin de le valoriser, notamment pour produire de l'électricité ou de la chaleur. L'unité de combustion UCO peut être un moteur de cogénération, une chaudière, une turbine, etc.

Ce système permet avantageusement de retirer du dioxyde de carbone du flux de biogaz BS afin de pouvoir le valoriser ultérieurement ou de le stocker pour éviter qu'il ne pollue l'atmosphère (réduction des gaz à effets de serre). De plus, la présence de l'unité de capture amont UC-AM permet de réduire le coût de l'unité d'épuration UE à installer car le débit entrant dans l'unité d'épuration UE est réduit. En effet, plus le débit est faible, plus la taille des équipements de l'unité d'épuration UE peut être réduite et/ou moins d'équipements peuvent être utilisés, et moins de consommables (énergie et autre) sont utilisés, ce qui limite le coût de l'unité d'épuration UE. Ce système permet avantageusement aussi de retirer du dioxyde de carbone du flux de gaz résiduel GR1 issu de l'épuration afin de pouvoir le valoriser ultérieurement ou de le stocker pour éviter qu'il ne pollue l'atmosphère (réduction des gaz à effets de serre). En outre, le flux de gaz résiduel GR2 issu de l'unité de capture annexe UC-AN est valorisé par combustion tout en évitant de le rejeter dans l'atmosphère, ce qui permet de réduire l'émission de gaz polluant et permet de traiter l'ensemble des flux de gaz, principaux BS/BM ou résiduels GR1/GR2, du système pour une optimisation intégrale.

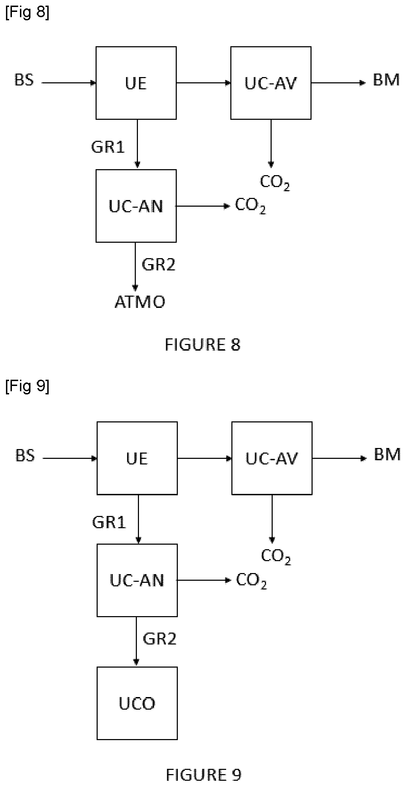

On a représenté à la figure 8 une huitième forme de réalisation du système selon l'invention.

Le système comprend une unité d'épuration UE adaptée pour recevoir un flux de biogaz BS et pour épurer ledit flux de biogaz BS reçu.

Lors de l'épuration, l'unité d'épuration UE génère un flux de gaz résiduel GR1 appauvri en méthane mais riche en dioxyde de carbone.

Le système comprend une unité de capture dite « avale », raccordée fluidiquement à la sortie de l'unité d'épuration UE et adaptée pour recevoir le flux de biogaz épuré ou biométhane BM et pour capturer du dioxyde de carbone dans ledit flux de biométhane BM reçu.

Le système comprend une unité de capture dite « annexe » UC-AN, reliée à l'unité d'épuration UE et adaptée pour recevoir le flux de gaz résiduel GR1 appauvri en méthane généré par l'unité d'épuration UE et pour capturer du dioxyde de carbone dans ledit flux de gaz résiduel GR1 appauvri en méthane, cette capture générant en sortie de l'unité de capture annexe UC-AN un flux de dioxyde de carbone enrichi et un flux de gaz résiduel GR2 enrichi en méthane (par rapport au flux entrant dans l'unité de capture). Dans le cas d'une liquéfaction, le flux de gaz résiduel GR2 enrichi en méthane est appelé flux « d'incondensables », les gaz résiduels constituant le flux de gaz n'ayant pas pu être liquéfiés aux pressions, températures et compositions données. Dans cette forme de réalisation, le flux de gaz résiduel GR2 enrichi en méthane est rejeté dans l'atmosphère ou bien recirculé en amont de l'unité d'épuration UE.

Ce système permet avantageusement de capturer du dioxyde de carbone dans le flux de biométhane BM issu de l'épuration afin de pouvoir le valoriser ultérieurement ou de le stocker pour éviter qu'il ne pollue l'atmosphère (réduction des gaz à effets de serre). L'unité de capture avale UC-AV permet de réduire le besoin d'efficacité de l'unité d'épuration UE, ce qui a pour effet de diminuer le coût de l'unité d'épuration UE à installer. Ce système permet avantageusement aussi de capturer du dioxyde de carbone dans le flux de gaz résiduel GR1 issu de l'épuration afin de pouvoir le valoriser ultérieurement ou de le stocker pour éviter qu'il ne pollue l'atmosphère (réduction des gaz à effets de serre). En outre, seul le flux de gaz résiduel GR2 issu de l'unité de capture annexe UC-AN est rejeté à l'atmosphère et non le flux de gaz résiduel GR1 issu de l'unité d'épuration UE qui est traité par l'unité de capture annexe UC-AN, ce qui permet de réduire l'émission de gaz à effets de serre.

On a représenté à la figure 9 une neuvième forme de réalisation du système selon l'invention.

Le système est identique au système de la huitième forme de réalisation mais comprend en outre une unité de combustion UCO raccordée fluidiquement à l'unité de capture annexe UC-AN de sorte à collecter le flux de gaz résiduel GR2 enrichi en méthane pour le brûler afin de le valoriser, notamment pour produire de l'électricité ou de la chaleur. L'unité de combustion UCO peut être un moteur de cogénération, une chaudière, une turbine, etc.

Ce système permet avantageusement de retirer du dioxyde de carbone du flux de biométhane BM issu de l'épuration afin de pouvoir le valoriser ultérieurement ou de le stocker pour éviter qu'il ne pollue l'atmosphère (réduction des gaz à effets de serre). Ce système permet avantageusement aussi de retirer du dioxyde de carbone du flux de gaz résiduel GR1 issu de l'épuration afin de pouvoir le valoriser ultérieurement ou de le stocker pour éviter qu'il ne pollue l'atmosphère (réduction des gaz à effets de serre). En outre, le flux de gaz résiduel GR2 issu de l'unité de capture annexe est valorisé par combustion tout en évitant de le rejeter dans l'atmosphère, ce qui permet de réduire l'émission de gaz polluant et permet de traiter l'ensemble des flux de gaz, principaux BS/BM ou résiduels GR1/GR2, du système pour une optimisation intégrale.

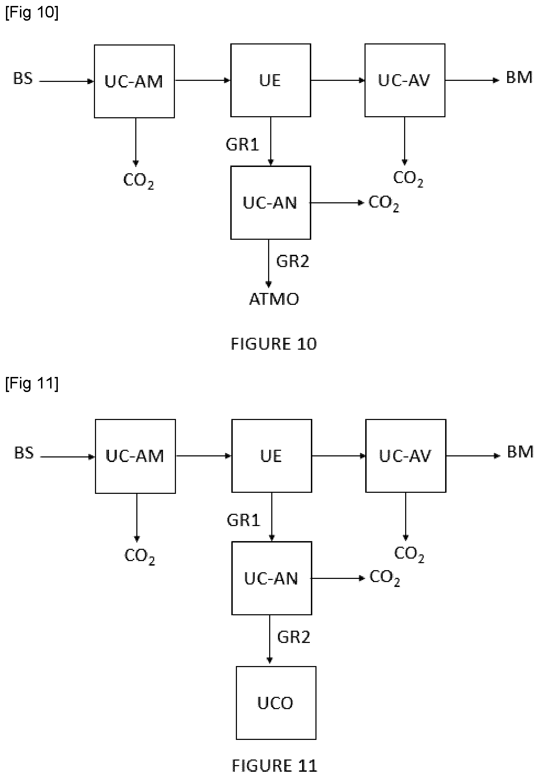

On a représenté à la figure 10 une dixième forme de réalisation du système selon l'invention.

Le système comprend une unité de capture dite « amont » UC-AM, adaptée pour recevoir un flux de biogaz BS et pour capturer du dioxyde de carbone dans ledit flux de biogaz BS afin de générer d'une part un flux de dioxyde de carbone enrichi, par exemple sous forme liquide (liquéfaction).

Le système comprend une unité d'épuration UE reliée à la sortie de l'unité de capture amont UC-AM et adaptée pour recevoir le flux de biogaz BS appauvri en dioxyde de carbone et pour épurer ledit flux de biogaz BS capturé reçu afin de le transformer en biométhane BM.

Lors de l'épuration, l'unité d'épuration UE génère, outre le flux de biométhane BM, un flux de gaz résiduel GR1, riche en dioxyde de carbone et comprenant aussi du méthane.

Le système comprend une unité de capture dite «avale» UC-AV, raccordée fluidiquement à la sortie de l'unité d'épuration UE et adaptée pour recevoir le flux de biométhane BM et pour capturer du dioxyde de carbone dans ledit flux de biométhane BM reçu.

Le système comprend une unité de capture dite « annexe » UC-AN, reliée à l'unité d'épuration UE et adaptée pour recevoir le flux secondaire de gaz résiduel GR1 appauvri en méthane généré par l'unité d'épuration UE et pour capturer du dioxyde de carbone dans ledit flux de gaz résiduel GR1 appauvri en méthane, cette capture générant en sortie de l'unité de capture un flux de dioxyde de carbone enrichi et un flux de gaz résiduel GR2 enrichi en méthane (par rapport au flux entrant dans l'unité de capture). Dans le cas d'une liquéfaction, le flux de gaz résiduel GR2 enrichi en méthane est appelé flux « d'incondensables », les gaz résiduels constituant le flux de gaz n'ayant pas pu être liquéfiés aux pressions/températures/compositions données. Dans cette forme de réalisation, le flux de gaz résiduel GR2 enrichi en méthane est rejeté dans l'atmosphère ou recirculé en amont de l'unité de capture amont UC-AM ou de l'unité d'épuration UE.

Ce système permet avantageusement de retirer du dioxyde de carbone à la fois du flux de biogaz BS avant épuration et du flux de biométhane BM après épuration afin de pouvoir le valoriser ultérieurement ou de le stocker pour éviter qu'il ne pollue l'atmosphère (réduction des gaz à effets de serre). De plus, la présence de l'unité de capture amont UC-AM permet de réduire le coût de l'unité d'épuration UE à installer car le débit entrant dans l'unité d'épuration UE est réduit. En effet, plus le débit est faible, plus la taille des équipements de l'unité d'épuration UE peut être réduite et/ou moins d'équipements peuvent être utilisés, et moins de consommables (énergie et autre) sont utilisés, ce qui limite le coût de l'unité d'épuration UE. L'unité de capture avale UC-AV permet de réduire le besoin d'efficacité de l'unité d'épuration UE, ce qui a pour effet de diminuer le coût de l'unité d'épuration UE à installer. Ce système permet avantageusement ensuite de retirer du dioxyde de carbone du flux de biométhane issu de l'épuration afin de pouvoir le valoriser ultérieurement ou de le stocker pour éviter qu'il ne pollue l'atmosphère (réduction des gaz à effets de serre). Ce système permet avantageusement aussi de retirer du dioxyde de carbone du flux de gaz résiduel GR1 issu de l'épuration afin de pouvoir le valoriser ultérieurement ou de le stocker pour éviter qu'il ne pollue l'atmosphère (réduction des gaz à effets de serre). En outre, seul le flux de gaz résiduel GR2 issu de l'unité de capture annexe UC-AN est rejeté à l'atmosphère et non le flux de gaz résiduel GR1 issu de l'unité d'épuration UE qui est traité par l'unité de capture annexe UC-AN, ce qui permet de réduire l'émission de gaz à effets de serre.

On a représenté à la figure 11 une onzième forme de réalisation du système selon l'invention.

Le système est identique au système de la dixième forme de réalisation mais comprend en outre une unité de combustion UCO raccordée fluidiquement à l'unité de capture annexe UC-AN de sorte à collecter le flux de gaz résiduel GR2 enrichi en méthane pour le brûler afin de le valoriser, notamment pour produire de l'électricité ou de la chaleur. L'unité de combustion UCO peut être un moteur de cogénération, une chaudière, une turbine, etc.

Ce système permet avantageusement de retirer du dioxyde de carbone à la fois du flux de biogaz BS avant épuration et du flux de biométhane BM après épuration afin de pouvoir le valoriser ultérieurement ou de le stocker pour éviter qu'il ne pollue l'atmosphère (réduction des gaz à effets de serre). De plus, la présence de l'unité de capture amont UC-AM permet de réduire le coût de l'unité d'épuration UE à installer car le débit entrant dans l'unité d'épuration UE est réduit. En effet, plus le débit est faible, plus la taille des équipements de l'unité d'épuration UE peut être réduite et/ou moins d'équipements peuvent être utilisés, et moins de consommables (énergie et autre) sont utilisés, ce qui limite le coût de l'unité d'épuration UE. L'unité de capture avale UC-AV permet de réduire le besoin d'efficacité de l'unité d'épuration UE, ce qui a pour effet de diminuer le coût de l'unité d'épuration UE à installer. Ce système permet avantageusement ensuite de retirer du dioxyde de carbone du flux de biométhane issu de l'épuration afin de pouvoir le valoriser ultérieurement ou de le stocker pour éviter qu'il ne pollue l'atmosphère (réduction des gaz à effets de serre). Ce système permet avantageusement aussi de retirer du dioxyde de carbone du flux de gaz résiduel GR1 issu de l'épuration afin de pouvoir le valoriser ultérieurement ou de le stocker pour éviter qu'il ne pollue l'atmosphère (réduction des gaz à effets de serre).

En outre, le flux de gaz résiduel GR2 issu de l'unité de capture annexe UC-AN est valorisé par combustion tout en évitant de le rejeter dans l'atmosphère, ce qui permet de réduire l'émission de gaz polluant et permet de traiter l'ensemble des flux de gaz, principaux BS/BM ou résiduels GR1/GR2, du système pour une optimisation intégrale.

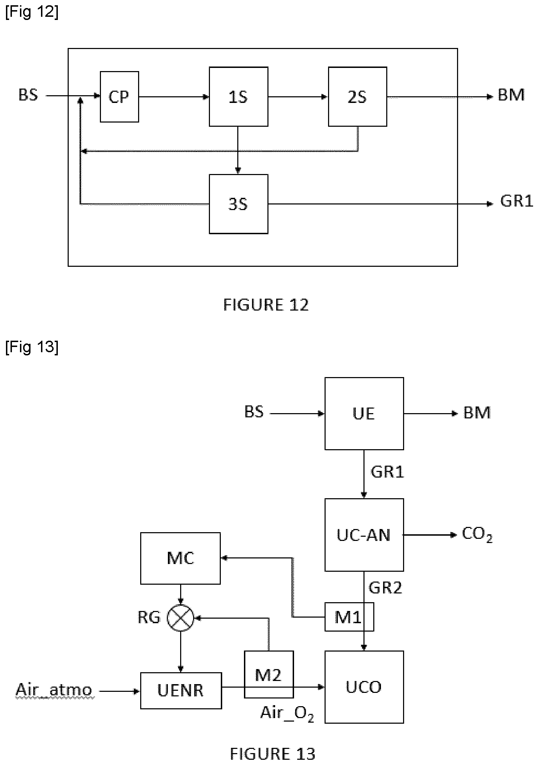

On a représenté à la figure 12 un exemple avantageux d'architecture fonctionnelle interne d'une unité d'épuration UE. En référence à la figure 12, l'unité d'épuration UE comprend un compresseur CP en entrée permettant de comprimer le flux de biogaz BS reçu (appauvri ou non en dioxyde de carbone) avant de le fournir à un premier étage de membranes 1S permettant d'épurer le flux comprimé pour en augmenter la proportion de méthane puis à un deuxième étage de membranes 2S pour augmenter encore la proportion de méthane au-delà de 97 % afin d'obtenir un flux de biométhane riche en méthane. Le flux de gaz résiduel issu de l'épuration par le premier étage de membranes 1S est envoyé à un troisième étage de membranes 3S qui le sépare en un flux riche en méthane qui est recirculé en entrée du compresseur CP et un flux appauvri en méthane qui constitue le flux de gaz résiduel GR1 sortant de l'unité d'épuration UE. Le flux de gaz résiduel issu de l'épuration par le deuxième étage de membranes 2S est recirculé en entrée du compresseur CP.

En variante, l'unité d'épuration UE pourrait comprendre un seul étage de membranes 1S ou seulement deux étages de membranes 1S, 2S.

Fonction avantageuse pour les systèmes des quatrième, septième, neuvième et onzième formes de réalisation

Les quatrième, septième, neuvième et onzième formes de réalisation, qui permettent la valorisation du flux de gaz résiduel GR2 issu de l'unité de capture annexe UC-AN dans une unité de combustion UCO peuvent avantageusement comprendre en outre un module de fourniture apte à fournir un flux gazeux comportant du dioxygène à l'unité de combustion UCO des gaz résiduels et un module de contrôle MC.

L'unité de combustion UCO est caractérisée d'une part, par un facteur dit « de méthane » (YCH4mini constructeur) indiquant la fraction volumique minimale de méthane que doit contenir ledit flux de gaz résiduels issu de l'unité de capture annexe UC-AN pour permettre la combustion du méthane qu'il contient et, d'autre part, par un facteur dit « de dioxygène » ($\lambda$) indiquant la quantité minimum de dioxygène à apporter pour pouvoir brûler lesdits gaz résiduels.

De préférence, ce module de fourniture est une unité d'enrichissement d'air UENR en dioxygène adapté pour collecter un flux d'air atmosphérique, enrichir ledit flux d'air atmosphérique en dioxygène, par exemple à partir d'un système de membranes, et fournir ce flux d'air enrichi en dioxygène à l'unité de combustion UCO.

Le module de contrôle MC est configuré pour déterminer une consigne de teneur en dioxygène ($Y_{O2air}$ enrichi) d'un flux d'air permettant de réaliser la combustion du méthane contenu dans les gaz résiduels dans l'unité de combustion UCO à partir de la teneur en méthane envoyée par le premier analyseur ($Y_{CH4}$ résiduel) en respectant le facteur de dioxygène ($\lambda$) et le facteur de méthane ($Y_{CH4mini}$ constructeur) de l'unité de combustion UCO et pour fournir la consigne de teneur en dioxygène ($Y\ O2\ air$ enrichi) déterminée au régulateur RG.

Le module de fourniture est apte à générer un flux gazeux comportant une proportion de dioxygène égale au taux d'enrichissement en dioxygène ($Y_{O2\ air}$ enrichi) reçu du module de contrôle.

Un premier exemple de mise en œuvre de cette fonction va maintenant être décrit en référence à la figure 13. Cet exemple est basé sur la quatrième forme de réalisation, cet exemple pouvant être transposé aux septième, neuvième et onzième formes de réalisation.

Le système illustré à la figure 13 correspond à la quatrième forme de réalisation à laquelle ont été ajoutés un module de contrôle MC, un premier analyseur M1 du flux de gaz résiduel GR2 issu de l'unité de capture annexe UC-AN, un module de fourniture se présentant sous la forme d'une unité d'enrichissement UENR en dioxygène, un deuxième analyseur M2 du flux d'air enrichi $Air\_O_2$ fourni par l'unité d'enrichissement UENR à l'unité de combustion UCO et un régulateur RG.

Le premier analyseur M1 est configuré pour analyser la composition du flux de gaz résiduel GR2 issu de l'unité de capture annexe UC-AN, pour déterminer, par exemple périodiquement, la teneur en méthane dudit flux de gaz résiduel GR2 et pour envoyer la teneur déterminée au module de contrôle MC.

Le deuxième analyseur M2 est configuré pour analyser la composition du flux d'air enrichi $Air\_O_2$ fourni par l'unité d'enrichissement UENR à l'unité de combustion UCO et pour envoyer ses données au régulateur RG.

Le régulateur RG est adapté pour recevoir, du module de contrôle MC, une consigne de teneur en dioxygène et, du deuxième analyseur M2, une teneur en dioxygène du flux d'air enrichi $Air\_O_2$ fourni par l'unité d'enrichissement UENR à l'unité de combustion UCO, et pour fournir à l'unité d'enrichissement UENR une correction à appliquer, déterminée à partir de la consigne de teneur en dioxygène et de la teneur en dioxygène du flux d'air enrichi $Air\_O_2$.

L'unité d'enrichissement UENR est configurée pour collecter un flux d'air atmosphérique $Air\_atmo$, pour enrichir ledit flux d'air atmosphérique en dioxygène, par exemple à partir d'un système de membranes, en fonction d'une valeur corrective fournie par le régulateur RG et pour fournir ce flux d'air enrichi en dioxygène Air_O$_2$ à l'unité de combustion UCO.

Dans cette forme de réalisation du système, le module de contrôle MC est configuré pour calculer la consigne de teneur en dioxygène Y$_{O2air}$ enrichi du flux d'air enrichi en dioxygène Air_O$_2$ selon la formule suivante :

[Math. 1]

$$Y_{O2\ Air\_O2} = \frac{2\lambda \times Y_{CH4\_GR2} \times (Y_{inertes} - 1)}{1 - Y_{inertes} - Y_{CH4\_GR2} \times (2\lambda + 1)}$$

où Y$_{CH4}$ résiduel est la teneur en méthane mesurée par le premier analyseur M1, A est le facteur de dioxygène de l'unité de combustion UCO et Y$_{inertes}$ est le taux d'inertes maximal admissible dans le mélange formé par le flux de gaz résiduel GR2 issu de l'unité de capture annexe UC-AN entrant dans l'unité de combustion UCO et le flux d'air enrichi en dioxygène Air_O$_2$.

En fonctionnement du système, le premier analyseur envoie en continu la teneur en méthane du flux de gaz résiduel GR2 issu de l'unité de capture annexe UC-AN, le module de contrôle MC détermine la consigne de teneur en dioxygène Y$_{O2air}$ enrichi du flux d'air enrichi en dioxygène Air_O$_2$ à partir de ladite teneur en méthane du flux de gaz résiduel GR2 et la transmet au régulateur RG qui reçoit en parallèle les mesures de teneur en dioxygène du flux d'air enrichi en dioxygène Air_O$_2$ mesurée par le deuxième analyseur M2. Le régulateur RG envoie alors une valeur corrective, déterminée à partir de la consigne de teneur en dioxygène Y$_{O2air}$ enrichi reçue et de la teneur en dioxygène du flux d'air enrichi en dioxygène Air_O$_2$ mesurée, à l'unité d'enrichissement UENR afin qu'elle adapte la teneur en dioxygène du flux enrichi en dioxygène pour assurer et optimiser la combustion du flux de gaz résiduel GR2 issu de l'unité de capture annexe UC-AN par l'unité de combustion UCO.

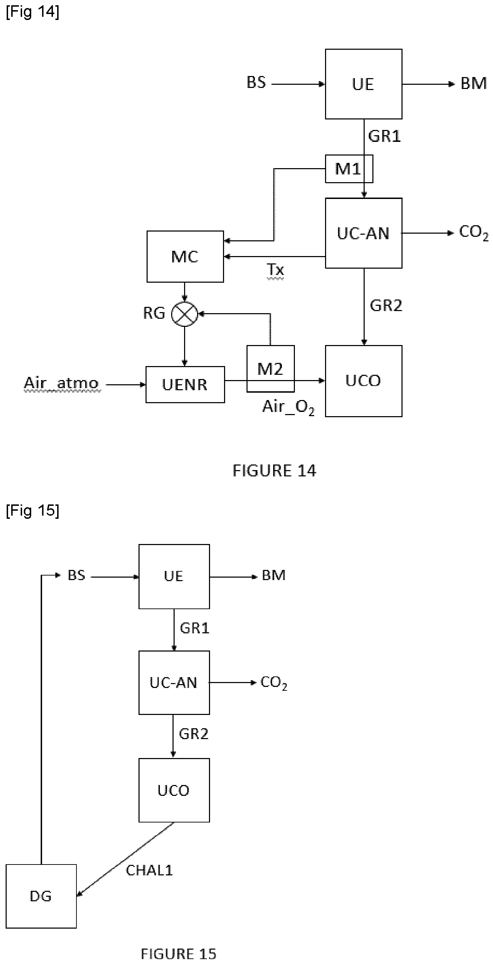

On a représenté à la figure 14 un autre exemple du système implémentant cette fonction. Le système illustré à la figure 14 correspond à la quatrième forme de réalisation à laquelle ont été ajoutés un module de contrôle MC, un premier analyseur M1 du flux de gaz résiduel GR1 issu de l'unité d'épuration UE, un module de fourniture se présentant sous la forme d'une unité d'enrichissement UENR en dioxygène, un deuxième analyseur M2 du flux d'air enrichi Air_O$_2$ fourni par l'unité d'enrichissement UENR à l'unité de combustion UCO et un régulateur RG. Dans cet exemple, l'unité de capture annexe UC-AN est configurée pour envoyer au module de contrôle MC, par exemple périodiquement, une valeur du taux de capture Tx du dioxygène par ladite unité de capture annexe UC-AN.

Le premier analyseur M1 est configuré pour analyser la composition du flux de gaz résiduel GR1 issu de l'unité d'épuration UE, pour déterminer, par exemple périodiquement, la teneur en méthane dudit flux de gaz résiduel GR2 et pour envoyer la teneur déterminée au module de contrôle MC.

Le deuxième analyseur M2 est configuré pour analyser la composition du flux d'air enrichi Air_O$_2$ fourni par l'unité d'enrichissement UENR à l'unité de combustion UCO et pour envoyer ses données au régulateur RG.

Le régulateur RG est adapté pour recevoir, du module de contrôle MC, une consigne de teneur en dioxygène et, du deuxième analyseur M2, une teneur en dioxygène du flux d'air enrichi Air_O$_2$ fourni par l'unité d'enrichissement UENR à l'unité de combustion UCO, et pour fournir à l'unité d'enrichissement UENR une correction à appliquer, déterminée à partir de la consigne de teneur en dioxygène et de la teneur en dioxygène du flux d'air enrichi Air_O$_2$.

L'unité d'enrichissement UENR est configurée pour collecter un flux d'air atmosphérique Air_atmo, pour enrichir ledit flux d'air atmosphérique en dioxygène, par exemple à partir d'un système de membranes, en fonction d'une valeur corrective par le régulateur RG et pour fournir ce flux d'air enrichi en dioxygène Air_O$_2$ à l'unité de combustion UCO.

Dans cette forme de réalisation du système, le module de contrôle MC est configuré pour calculer la consigne de teneur Y$_{O2air}$ enrichi en dioxygène du flux d'air enrichi en dioxygène Air_O$_2$ selon la formule suivante :

[Math. 2]

$$Y_{O2\ air\ enrichi} = \frac{2\lambda \times \left[\frac{Y_{CH4\ résiduel}}{Y_{CH4\ résiduel} + (1 - Y_{CH4\ résiduel}) \times (1 - Tx)}\right] \times (Y_{inertes} - 1)}{1 - Y_{inertes} - \left[\frac{Y_{CH4\ résiduel}}{Y_{CH4\ résiduel} + (1 - Y_{CH4\ résiduel}) \times (1 - Tx)}\right] \times (2\lambda + 1)}$$

où Y$_{CH4}$ résiduel est la teneur en méthane mesurée par le premier analyseur M1, A est le facteur de dioxygène de l'unité de combustion UCO, Tx est le taux de capture de dioxygène par l'unité de capture annexe UC-AN et Yinertes est le taux d'inertes maximal admissible dans le mélange formé par le flux de gaz résiduel GR2 issu de l'unité de capture annexe UC-AN entrant dans l'unité de combustion UCO et le flux d'air enrichi en dioxygène Air_O$_2$.

En fonctionnement du système, le premier analyseur envoie en continu la teneur en méthane du flux de gaz résiduel GR1 issu de l'unité d'épuration UE, le module de contrôle MC détermine la consigne de teneur en dioxygène $Y_{O2air}$ enrichi du flux d'air enrichi en dioxygène Air_$O_2$ à partir de ladite teneur en méthane du flux de gaz résiduel GR1 et du taux de capture de dioxyde de carbone envoyé par l'unité de capture annexe UC-AN et la transmet au régulateur RG qui reçoit en parallèle les mesures de teneur en dioxygène du flux d'air enrichi en dioxygène Air_$O_2$ mesurée par le deuxième analyseur M2. Le régulateur RG envoie alors une valeur corrective, déterminée à partir de la consigne de teneur en dioxygène $Y_{O2air}$ enrichi reçue et de la teneur en dioxygène du flux d'air enrichi en dioxygène Air_$O_2$ mesurée, à l'unité d'enrichissement UENR afin qu'elle adapte la teneur en dioxygène du flux enrichi en dioxygène pour assurer et optimiser la combustion du flux de gaz résiduel GR2 issu de l'unité de capture annexe UC-AN par l'unité de combustion UCO.

On a représenté ci-après un exemple de tableau utilisable par le module de contrôle MC pour déterminer la consigne de teneur en dioxygène à partir de la teneur en méthane et du taux de capture de dioxygène de l'unité de capture annexe UC-AN :

[Table 1]

| Taux de capture du CO2 dans les gaz pauvres issus de l'unité d'épuration | Teneur en CH4 dans le gaz pauvre en sortie de l'unité d'épuration du biogaz | | | | | | | | | |
|---|---|---|---|---|---|---|---|---|---|---|
| | 7,6% | 10% | 15% | 20% | 25% | 30% | 35% | 40% | 55% | 60% |
| 0% | 100,0% | 47,5% | 30,3% | 25,7% | 23,5% | 22,3% | 21,5% | Air atmo. | Air atmo. | Air atmo. |
| 10% | 69,8% | 41,2% | 28,6% | 24,8% | 23,0% | 21,9% | 21,2% | Air atmo. | Air atmo. | Air atmo. |
| 20% | 53,6% | 36,4% | 27,0% | 23,9% | 22,4% | 21,5% | Air atmo. | Air atmo. | Air atmo. | Air atmo. |
| 30% | 43,6% | 32,6% | 25,6% | 23,1% | 21,9% | 21,1% | Air atmo. | Air atmo. | Air atmo. | Air atmo. |
| 40% | 36,7% | 29,5% | 24,4% | 22,4% | 21,4% | Air atmo. | Air atmo. | Air atmo. | Air atmo. | Air atmo. |
| 50% | 31,6% | 26,9% | 23,2% | 21,7% | Air atmo. | Air atmo. | Air atmo. | Air atmo. | Air atmo. | Air atmo. |
| 60% | 27,8% | 24,8% | 22,2% | 21,1% | Air atmo. | Air atmo. | Air atmo. | Air atmo. | Air atmo. | Air atmo. |
| 70% | 24,8% | 23,0% | 21,2% | Air atmo. | Air atmo. | Air atmo. | Air atmo. | Air atmo. | Air atmo. | Air atmo. |
| 80% | 22,4% | 21,4% | Air atmo. | Air atmo. | Air atmo. | Air atmo. | Air atmo. | Air atmo. | Air atmo. | Air atmo. |
| 90% | Air atmo. | Air atmo. | Air atmo. | Air atmo. | Air atmo. | Air atmo. | Air atmo. | Air atmo. | Air atmo. | Air atmo. |
| 100% | Air atmo. | Air atmo. | Air atmo. | Air atmo. | Air atmo. | Air atmo. | Air atmo. | Air atmo. | Air atmo. | Air atmo. |

Exemple de mode de réalisation du procédé selon l'invention

Dans cet exemple, le procédé comprend une étape d'épuration d'un flux de biogaz couplée à au moins une étape de capture en dioxyde de carbone d'un flux de gaz, ledit flux de gaz pouvant être le flux de biogaz avant épuration, le flux de biogaz après épuration ou le flux de gaz résiduel issu de l'épuration.

On a représenté à la figure 15 une première évolution de la quatrième forme de réalisation du système selon l'invention.

Dans cette configuration, le système comprend en outre un équipement de production de biogaz et l'unité de combustion UCO est adaptée pour produire de la chaleur par combustion du flux de gaz résiduel GR2 issu de la capture de dioxyde de carbone reçu de l'unité de capture annexe UC-AN. Dans cet exemple non limitatif, l'équipement de production de biogaz est un digesteur DG qui reçoit de l'unité de combustion UCO de la chaleur CHAL1 générée par la combustion du flux de gaz résiduel GR2 afin d'améliorer le rendement du système.

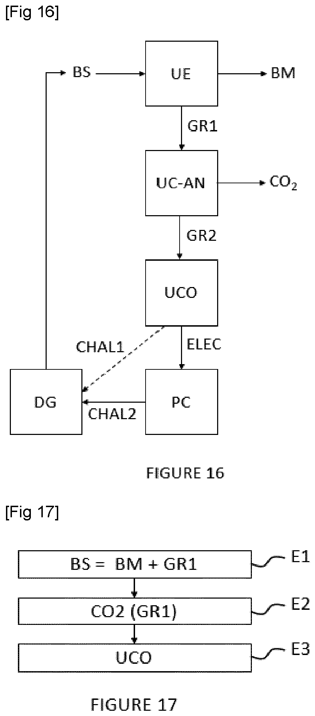

On a représenté à la figure 16 une deuxième évolution de la quatrième forme de réalisation du système selon l'invention.

Dans cette configuration, le système comprend en outre une pompe à chaleur PC et un équipement de production de biogaz et l'unité de combustion UCO est adaptée pour produire de l'électricité ELEC à partir du flux de gaz résiduel GR2 issu de la capture de dioxyde de carbone reçu de l'unité de capture annexe UC-AN. Par exemple, l'unité de combustion UCO est de type module de cogénération. Dans cet exemple non limitatif, l'équipement de production de biogaz est un digesteur DG.

La pompe à chaleur PC est alimentée électriquement à partir de l'électricité ELEC produite par l'unité de combustion UCO afin de produire de la chaleur CHAL2.

Le digesteur DG est relié à la pompe à chaleur PC afin de recevoir la chaleur CHAL2 produite par ladite pompe à chaleur PC et améliorer ainsi le rendement énergétique du système. Le digesteur DG peut aussi avantageusement recevoir la chaleur CHAL1 directement de l'unité de combustion UCO afin d'augmenter encore davantage le rendement énergétique du système.

De préférence, le flux de biogaz produit par le digesteur DG est acheminé en entrée de l'unité d'épuration équipement d'utilisateur (flux de biogaz BS). On notera qu'en variante le biogaz produit par le digesteur DG pourrait être acheminé ailleurs qu'en entrée du système, par exemple dans une cuve de stockage.

Ce dispositif de pompe à chaleur PC est adaptable à toute forme de réalisation du système comportant une unité de combustion UCO telle que la quatrième, la septième, la neuvième ou la onzième forme de réalisation.

Dans l'exemple illustré à la figure 17, la capture de dioxyde de carbone étant réalisée sur le flux de gaz résiduel GR1 issu de l'épuration de sorte à générer un flux de gaz résiduel GR2 issu de la capture de dioxyde de carbone, le procédé comprend, suite à l'étape d'épuration E1 et à l'étape de capture E2 du dioxyde de carbone dans le flux de gaz résiduel GR1 issu de l'épuration, une étape de combustion E3 du flux gaz résiduel issu de la capture de dioxyde de carbone dans une unité de combustion UCO.

A titre d'exemple, selon la figure 16 pour un système de valorisation du flux de gaz résiduel GR2 issu de la capture de dioxyde de carbone, comportant une unité de combustion UCO ayant un rendement thermique de 50% et un rendement électrique de 35% et une pompe à chaleur PC ayant un COP (coefficient de performance) de 3, le rendement énergétique global dudit système de valorisation du flux de gaz résiduel GR2 issu de la capture de dioxyde de carbone est de 155% (50% + 3x35%). Ce rendement dudit système avec une pompe à chaleur PC est ainsi supérieur au rendement obtenu avec le même système dépourvu de pompe à chaleur PC (85%).

L'invention permet donc de valoriser certains flux de gaz qui ne l'étaient pas dans un système de traitement de biogaz permettant de produire du biométhane. Notamment, le flux de gaz résiduel GR2 issu de l'unité de capture de dioxygène peut être valorisé dans une unité de combustion UCO de sorte qu'aucun flux du système ne soit perdu ou inutilisé.

**Revendications**

1. Procédé de traitement de gaz, ledit procédé comprenant une étape (E1) d'épuration d'un flux de biogaz (BS) couplée à au moins une étape (E2) de capture de dioxyde de carbone d'un flux de gaz, ledit flux de gaz pouvant être le flux de biogaz avant épuration (BS), le flux de biogaz après épuration (BM) ou le flux de gaz résiduel (GR1) issu de l'épuration.

2. Procédé selon la revendication 1, dans lequel, la capture de dioxyde de carbone étant réalisée sur le flux de gaz résiduel (GR1) issu de l'épuration de sorte à générer un flux de gaz résiduel (GR2) issu de la capture de dioxyde de carbone, le procédé comprend une étape (E3) de combustion du flux gaz résiduel (GR2) issu de la capture de dioxyde de carbone dans une unité de combustion (UCO).

3. Système de traitement de gaz, ledit système comprenant au moins une unité d'épuration (UE) d'un flux de biogaz (BS) couplée à au moins une unité de capture (UC-AM, UC-AV, UC-AN) de dioxyde de carbone dans un flux de gaz, ledit flux de gaz pouvant être le flux de biogaz avant épuration (BS), le flux de biogaz après épuration (BM) ou le flux de gaz résiduel (GR1) issu de l'épuration.

**4.** Système selon la revendication précédente, comprenant une unité de capture amont (UC-AM), adaptée pour recevoir un flux de biogaz et capturer du dioxyde de carbone dans ledit flux de biogaz, et une unité d'épuration (UE) reliée à l'unité de capture (UC-AM) et adaptée pour recevoir le flux de biogaz appauvri en dioxyde de carbone et épurer ledit flux de biogaz appauvri reçu.

**5.** Système selon la revendication 4, comprenant une unité d'épuration, (UE) adaptée pour recevoir un flux de biogaz (BS) et épurer ledit flux de biogaz reçu, et une unité de capture avale (UC-AV), reliée à l'unité d'épuration (UE) et adaptée pour recevoir le flux de biogaz épuré (BM) et capturer du dioxyde de carbone dans ledit flux de biogaz épuré (BM) reçu.

**6.** Système selon la revendication 4, comprenant une unité d'épuration (UE), adaptée pour recevoir un flux de biogaz (BS) et épurer ledit flux de biogaz (BS) reçu en générant un flux de gaz résiduel (GR1), et une unité de capture annexe (UC-AN), reliée à l'unité d'épuration (UE) et adaptée pour recevoir le flux de gaz résiduel (GR1) issu de l'unité d'épuration (UE) et capturer du dioxyde de carbone dans ledit flux de gaz résiduel (GR1) reçu pour former un flux de dioxyde de carbone enrichi et un flux de gaz résiduel (GR2) issu de la capture de dioxyde de carbone.

**7.** Système selon la revendication précédente, comprenant en outre une unité de combustion (UCO) connectée fluidiquement à l'unité de capture annexe (UC-AN) et adaptée pour recevoir ledit flux de gaz résiduel (GR2) issu de la capture de dioxyde de carbone et pour brûler ledit flux de gaz résiduel (GR2) issu de la capture de dioxyde de carbone reçu afin de le valoriser en énergie électrique ou en chaleur.

**8.** Système selon la revendication précédente, comprenant en outre :

- un module de contrôle (MC),
- un premier analyseur (M1) configuré pour analyser la composition du flux de gaz résiduel (GR2) issu de l'unité de capture annexe (UC-AN), pour déterminer la teneur en méthane dudit flux de gaz résiduel (GR2) et pour envoyer la teneur déterminée au module de contrôle MC,
- une unité d'enrichissement (UENR), configurée pour collecter un flux d'air atmosphérique (Air_atmo), pour enrichir ledit flux d'air atmosphérique en dioxygène en fonction d'une valeur corrective fournie par le régulateur (RG) et pour fournir ce flux d'air enrichi en dioxygène (Air_O$_2$) à l'unité de combustion (UCO),
- un deuxième analyseur (M2) configuré pour analyser la composition du flux d'air enrichi (Air_O$_2$) fourni par l'unité d'enrichissement (UENR) à l'unité de combustion (UCO) et pour envoyer ses données au régulateur (RG),
- un régulateur (RG) configuré pour recevoir, du module de contrôle (MC), une consigne de teneur en dioxygène et, du deuxième analyseur (M2), une teneur en dioxygène du flux d'air enrichi (Air_O$_2$) fourni par l'unité d'enrichissement (UENR) à l'unité de combustion (UCO), et pour fournir à l'unité d'enrichissement (UENR une correction à appliquer, déterminée à partir de la consigne de teneur en dioxygène et de la teneur en dioxygène du flux d'air enrichi (Air_O$_2$),

système dans lequel le module de contrôle (MC) étant configuré pour déterminer une consigne de teneur en dioxygène (Y O2 air enrichi) d'un flux d'air permettant de réaliser la combustion du méthane contenu dans les gaz résiduels dans l'unité de combustion (UCO) à partir de la teneur en méthane envoyée par le premier analyseur (Y CH4 résiduel) en respectant le facteur de dioxygène ($\lambda$) et le facteur de méthane (YCH4mini constructeur) de l'unité de combustion (UCO) et pour fournir la consigne de teneur en dioxygène (Y O2 air enrichi) déterminée au régulateur (RG).

**9.** Système selon la revendication 7, comprenant en outre :

- un module de contrôle (MC),
- un premier analyseur (M1) configuré pour analyser la composition du flux de gaz résiduel (GR1) issu de l'unité d'épuration (UE), pour déterminer la teneur en méthane dudit flux de gaz résiduel (GR1) et pour envoyer la teneur déterminée au module de contrôle (MC),
- une unité d'enrichissement (UENR), configurée pour collecter un flux d'air atmosphérique (Air_atmo), pour enrichir ledit flux d'air atmosphérique en dioxygène en fonction d'une valeur corrective fournie par le régulateur (RG) et pour fournir ce flux d'air enrichi en dioxygène (Air_O$_2$) à l'unité de combustion (UCO),
- un deuxième analyseur (M2) configuré pour analyser la composition du flux d'air enrichi (Air_O$_2$) fourni par l'unité d'enrichissement (UENR) à l'unité de combustion (UCO) et pour envoyer ses données au régulateur (RG),
- un régulateur (RG) configuré pour recevoir, du module de contrôle (MC), une consigne de teneur en dioxygène et, du deuxième analyseur (M2), une teneur en dioxygène du flux d'air enrichi (Air_O$_2$) fourni par l'unité d'enrichissement (UENR) à l'unité de combustion (UCO), et pour fournir à l'unité d'enrichissement (UENR) une correction à appliquer, déterminée à partir de la consigne de teneur en dioxygène et de la teneur en dioxygène du flux d'air enrichi (Air_O$_2$),

système dans lequel :

- l'unité de capture annexe (UC-AN) est configurée pour envoyer le taux de capture de dioxyde de carbone au module de contrôle (MC),
- le module de contrôle (MC) est configuré pour déterminer une consigne de teneur en dioxygène (Y O2 air enrichi) d'un flux d'air permettant de réaliser la combustion du méthane contenu dans les gaz résiduels dans l'unité de combustion (UCO) à partir de la teneur en méthane envoyée par le premier analyseur (Y CH4 résiduel) et du taux de capture envoyé par l'unité de capture annexe UC-AN en respectant le facteur de dioxygène ($\lambda$) et le facteur de méthane (YCH4mini constructeur) de l'unité de combustion (UCO) et pour fournir la consigne de teneur en dioxygène (Y O2 air enrichi) déterminée au régulateur (RG).

10. Système selon l'une des revendications 3 à 9, dans lequel l'au moins une unité de capture (UC-AM, UC-AV, UC-AN) est une unité de liquéfaction.

11. Système selon l'une des revendications 3 à 10, ledit système comprenant une unité de capture annexe (UC-AN) et une unité de combustion (UCO) connectée fluidiquement à ladite unité de capture annexe (UC-AN) et adaptée pour recevoir ledit flux de gaz résiduel (GR2) issu de la capture de dioxyde de carbone et pour brûler ledit flux de gaz résiduel (GR2) issu de la capture de dioxyde de carbone reçu, le système comprend en outre un équipement de production de biogaz (DG) connecté fluidiquement à l'unité de combustion (UCO) afin de recevoir la chaleur produite par ladite unité de combustion.

12. Système selon l'une des revendications 3 à 11, ledit système comprenant une unité de capture annexe (UC-AN) et une unité de combustion (UCO) connectée fluidiquement à ladite unité de capture annexe (UC-AN) et adaptée pour recevoir le flux de gaz résiduel (GR2) issu de la capture de dioxyde de carbone et pour brûler ledit flux de gaz résiduel (GR2), ladite unité de combustion (UCO) étant configurée pour produire de l'électricité (ELEC) à partir de la combustion du flux de gaz résiduel (GR2) reçu, le système comprenant en outre une pompe à chaleur (PC), alimentée électriquement à partir de l'électricité (ELEC) produite par l'unité de combustion (UCO) et configurée pour produire de la chaleur (CHAL), et un équipement de production de biogaz (DG) relié à la pompe à chaleur (PC) afin de recevoir la chaleur (CHAL) produite par ladite pompe à chaleur (PC).

[Fig 1]

BS $\longrightarrow$ UC-AM $\longrightarrow$ UE $\longrightarrow$ BM

UC-AM $\downarrow$ CO$_2$

UE $\downarrow$ GR1

FIGURE 1

[Fig 2]

BS $\longrightarrow$ UE $\longrightarrow$ UC-AV $\longrightarrow$ BM

UE $\downarrow$ GR1

UC-AV $\downarrow$ CO$_2$

FIGURE 2

[Fig 3]

BS $\longrightarrow$ UE $\longrightarrow$ BM

UE $\downarrow$ GR1

UC-AN $\longrightarrow$ CO$_2$

UC-AN $\downarrow$ GR2

ATMO

FIGURE 3

[Fig 4]

BS ⟶ UE ⟶ BM

UE → GR1 → UC-AN

UC-AN ⟶ $CO_2$

UC-AN → GR2 → UCO

FIGURE 4

[Fig 5]

BS ⟶ UC-AM ⟶ UE ⟶ UC-AV ⟶ BM

UC-AM ↓ $CO_2$

UE ↓ GR1

UC-AV ↓ $CO_2$

FIGURE 5

[Fig 6]

FIGURE 6

[Fig 7]

FIGURE 7

EP 4 070 878 A1

[Fig 8]

FIGURE 8

[Fig 9]

FIGURE 9

[Fig 10]

FIGURE 10

[Fig 11]

FIGURE 11

[Fig 12]

FIGURE 12

[Fig 13]

FIGURE 13

[Fig 14]

FIGURE 14

[Fig 15]

FIGURE 15

[Fig 16]

FIGURE 16

[Fig 17]

FIGURE 17

Europäisches
Patentamt

European
Patent Office

Office européen
des brevets

## RAPPORT DE RECHERCHE EUROPEENNE

Numéro de la demande

**EP 22 16 7224**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2010 006649 A1 (MESSER GROUP GMBH [DE]; MESSER IBERICA DE GASES S A U [ES]) 4 août 2011 (2011-08-04) * figures 1-2 * | 1,3,5 | INV. B01D53/62 B01D53/00 |
| X | YOUSEF AHMED M. ET AL: "Upgrading biogas to biomethane and liquid CO2: A novel cryogenic process", FUEL, vol. 251, 1 septembre 2019 (2019-09-01), pages 611-628, XP055877170, GB ISSN: 0016-2361, DOI: 10.1016/j.fuel.2019.03.127 * figures 1-3 * | 1-6,10 | |
| Y | US 2002/069754 A1 (RAUTENBACH ROBERT [DE] ET AL) 13 juin 2002 (2002-06-13) * revendication 4 * | 7-9 | |
| X | US 2018/112142 A1 (FOODY BRIAN [CA] ET AL) 26 avril 2018 (2018-04-26) | 1-7, 10-12 | DOMAINES TECHNIQUES RECHERCHES (IPC) |
| Y | * figures 8, 9a * * alinéa [0159] * | 7-9 | B01D |
| A | FR 3 013 358 A1 (AIR LIQUIDE [FR]) 22 mai 2015 (2015-05-22) * figure 1 * | 1-12 | |

Le présent rapport a été établi pour toutes les revendications

| Lieu de la recherche | Date d'achèvement de la recherche | Examinateur |
|---|---|---|
| Munich | 4 août 2022 | Marchand, Karin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

# EP 4 070 878 A1

## ANNEXE AU RAPPORT DE RECHERCHE EUROPEENNE
## RELATIF A LA DEMANDE DE BREVET EUROPEEN NO.

EP 22 16 7224

04-08-2022

| Document brevet cité au rapport de recherche | Date de publication | Membre(s) de la famille de brevet(s) | | Date de publication |
|---|---|---|---|---|
| DE 102010006649 A1 | 04-08-2011 | AUCUN | | |
| US 2002069754 A1 | 13-06-2002 | AT | 383509 T | 15-01-2008 |
| | | CA | 2357646 A1 | 23-03-2002 |
| | | CZ | 20013389 A3 | 16-10-2002 |
| | | DE | 10047262 A1 | 25-04-2002 |
| | | EP | 1191215 A2 | 27-03-2002 |
| | | ES | 2299454 T3 | 01-06-2008 |
| | | HU | 0103766 A2 | 28-04-2004 |
| | | MX | PA01009433 A | 16-07-2004 |
| | | PL | 349798 A1 | 25-03-2002 |
| | | PT | 1191215 E | 15-04-2008 |
| | | US | 2002069754 A1 | 13-06-2002 |
| US 2018112142 A1 | 26-04-2018 | US | 2018112142 A1 | 26-04-2018 |
| | | US | 2018251694 A1 | 06-09-2018 |
| | | WO | 2018072021 A1 | 26-04-2018 |
| FR 3013358 A1 | 22-05-2015 | CN | 105765040 A | 13-07-2016 |
| | | EP | 3071676 A1 | 28-09-2016 |
| | | FR | 3013358 A1 | 22-05-2015 |
| | | US | 2016289580 A1 | 06-10-2016 |
| | | WO | 2015071575 A1 | 21-05-2015 |

EPO FORM P0460